# EUROPÄISCHE PATENTSCHRIFT

(11) **EP 0 531 350 B1**
(45) Veröffentlichungstag und Bekanntmachung des Hinweises auf die Patenterteilung: **31.01.1996**
(21) Anmeldenummer: 91909676.8
(22) Anmeldetag: 17.05.1991
(51) Int. Cl.: B60R 16/04

(54) **ANORDNUNG ZUR KÜHLUNG DER BATTERIE EINES KRAFTFAHRZEUGES**
ARRANGEMENT FOR COOLING THE BATTERY OF A MOTOR VEHICLE
AGENCEMENT PERMETTANT LE REFROIDISSEMENT DE LA BATTERIE DE VEHICULES A MOTEUR

(30) Priorität: 08.06.1990 DE 4018347
(43) Veröffentlichungstag der Anmeldung: 17.03.1993
(73) Patentinhaber: AUDI AG, D-85045 Ingolstadt (DE)
(72) Erfinder: NAUMANN, Fritz, D-8071 Stammham (DE); HALDENWANGER, Günther, D-8070 Ingolstadt (DE)
(74) Vertreter: Engelhardt, Harald
(86) Internationale Anmeldenummer: EP9100925
(87) Internationale Veröffentlichungsnummer: WO9118759

(56) Entgegenhaltungen:
- DE-A- 3 316 512
- DE-A- 3 600 190
- FR-A- 1 136 652
- FR-A- 2 601 907
- US-A- 2 104 765
- US-A- 4 858 565

## Beschreibung

Die Erfindung bezieht sich auf eine Anordnung zur Kühlung der Batterie eines Kraftfahrzeuges gemäß dem Oberbegriff des Patentanspruchs 1.

Aus der japanischen Patentanmeldung JP-A-1-47640 ist es bekannt, im Motorraum eine Trennwand vorzusehen, welche zwischen dem Kühler des Motors und einem Scheinwerferausschnitt am vorderen Abschlußteil der Karosserie beginnt, von dort in Fahrzeuglängsrichtung nach hinten geführt ist und dann winkelförmig an das Radhaus anschließt. Nach oben hin ist der Raum-durch die Motorhaube abgeschlossen. In diesem Raum ist die Batterie des Fahrzeuges angeordnet. Zur Kühlung der Batterie wird der Raum über die Scheinwerferöffnung belüftet. Über eine seitliche Öffnung im Radhaus kann die erwärmte Luft austreten, so daß im Fahrbetrieb eine gute und von der Motorwärme im wesentlichen unbeeinflußte Kühlung der Batterie erfolgt. Bei stehendem Fahrzeug ist jedoch die Luftzirkulation oft nicht ausreichend.

Zur Verbesserung der Luftzirkulation bei stehendem Fahrzeug wurde deshalb schon vorgeschlagen, die Batterie ebenfalls in einem Gehäuse anzuordnen und mit einer Belüftungsöffnung sowie mit einem Entlüftungskanal zu versehen. Durch den nach oben ansteigenden Entlüftungskanal wird eine Kaminwirkung erzeugt, welche die erwärmte Luft von der Batterie wegführt und frische Luft über die Belüftungsöffnung ansaugt. In der Praxis hat sich jedoch gezeigt, daß darüber keine ausreichende Batteriekühlung erreicht werden kann.

Das Dokument US-A-2 104 765 offenbart eine Anordnung zur Kühlung der Batterie eines Kraftfahrzeuges, wobei die Batterie in einem Gehäuse angeordnet ist und das Gehäuse mit einer im Frontbereich des Fahrzeuges angeordneten Lufteinlaßöffnung sowie mit einer Luftauslaßöffnung in Verbindung steht.

Schließlich zeigt die FR-A-2 601 907 eine Kühlvorrichtung für eine Fahrzeugbatterie, wobei an der Luftleiteinrichtung zwischen dem Lüfter und dem Kühler des Motors ein Rohrabschnitt angeschlossen ist. Der Rohrabschnitt endet vor der Batterie, wodurch diese durch die auströmende Luft gekühlt wird.

Der Erfindung liegt die Aufgabe zugrunde, eine gattungsgemäße Anordnung zur Kühlung der Batterie eines Kraftfahrzeuges so weiter zu bilden, daß ohne zusätzlichen Energieaufwand (z. B. für einen Elektrolüfter) die Batteriekühlung bei stehendem Fahrzeug verbessert wird.

Die Aufgabe wird durch die Merkmale des Patentanspruchs 1 gelöst.

Dadurch, daß von dem Gehäuse der Batterie eine Leitung zu einer Luftleiteinrichtung geführt und mit dieser verbunden ist, in welche ein mit einem abschaltbaren Lüfter ausgestatteter Kühler für den Motor eingesetzt ist, kann die Lüfterwirkung zur Kühlung der Batterie mitherangezogen werden. Ein separater Lüfter, welcher die bei stehendem Fahrzeug notwendige Kühlung bewirkt, ist somit entbehrlich.

Die Leitung zum Gehäuse der Batterie kann vor oder nach dem Kühler an der Luftleiteinrichtung angeschlossen sein.

Zunächst zu dem Fall, daß die Aussparung zum Anschluß der Leitung - bezogen auf die Strömungsrichtung der Kühlluftströmung - vor dem Kühler angeordnet ist. Wenn es sehr warm ist und demzufolge das Motorkühlmittel des Kraftfahrzeuges eine hohe Temperatur aufweist, dann schaltet sich der Lüfter für den Kühler ein. Der Lüfter saugt dabei Frischluft über die Luftleiteinrichtung an, wodurch in dieser ein Unterdruck entsteht. Da an der Luftleiteinrichtung auch die zu dem Gehäuse der Batterie führende Leitung angeschlossen ist, wird über diese erwärmte Luft aus der Batterie abgesaugt. Gleichzeitig sorgt eine weitere, das Gehäuse der Batterie mit der Außenluft verbindende Leitung für die Zuführung kühlerer Frischluft zur Batterie.

Im Fahrbetrieb kehrt sich der Luftstrom zur Batteriekühlung um, da im Fahrbetrieb in der Luftleiteinrichtung ein Staudruck entsteht. Der Staudruck bewirkt, daß über die Leitung Frischluft in das Batteriegehäuse gedrückt wird. Von dort gelangt die durch die Batterie erwärmte Luft über eine weitere Leitung wieder nach außen.

Die Batterie ist in einem Gehäuse angeordnet, welches über eine Leitung mit der Luftleiteinrichtung verbunden ist. Die Leitung, beispielsweise eine flexible Schlauchleitung vorzugsweise aus Kunststoff, gewährt eine große Freiheit was den Unterbringungsort der Batterie im Motorraum anbelangt. Die zweite Öffnung im Gehäuse steht mit der Außenluft in Verbindung. Dazu kann das Gehäuse oder eine angeschlossene Leitung beispielsweise in das Radhaus oder bevorzugt im Unterdruckgebiet einer Frontklappenfuge münden. Neben dieser vollständigen Kapselung der Batterie ist es natürlich auch möglich, nur einen Teil der Batterie abzuschirmen und beispielsweise die nach vorne gerichtete Wandung entfallen zu lassen.

Wie eingangs erwähnt, kann die mit dem Gehäuse der Batterie in Verbindung stehende Leitung auch nach dem Kühler an der Luftleiteinrichtung angeschlossen sein. In diesem Fall mündet die zweite, mit dem Batteriegehäuse in Verbindung stehende Leitung im Frontbereich des Fahrzeuges.

Wenn bei einem hohen Temperaturniveau der Lüfter arbeitet, dann entsteht in der Luftleiteinrichtung ein Unterdruck, welcher die Luft aus dem Gehäuse für die Batterie absaugt. Im normalen Fahrbetrieb, wenn der Lüfter nicht arbeitet, wird die Luft durch den Staudruck im Frontbereich des Fahrzeuges über die zweite Leitung in das Batteriegehäuse gedrückt und gelangt von dort über die andere Leitung in die Luftleiteinrichtung, von wo aus sie über den Lüfter nach außen gelangt. Unabhängig davon, ob der Lüfter arbeitet oder nicht, bleibt die Strömungsrichtung erhalten. Es findet also keine Umkehr der Strömungsrichtung statt, wie dies bei der zuerst besprochenen Anordnung (Leitung ist vor dem Kühler an der Luftleiteinrichtung angeschlossen) der Fall ist.

Die Ansprüche 4 bis 6 beinhalten vorteilhafte Luftführungen im Gehäuse für die Batterie.

Zwei Ausführungsbeispiele der Erfindung sind in der Zeichnung dargestellt und werden nachfolgend näher beschrieben.

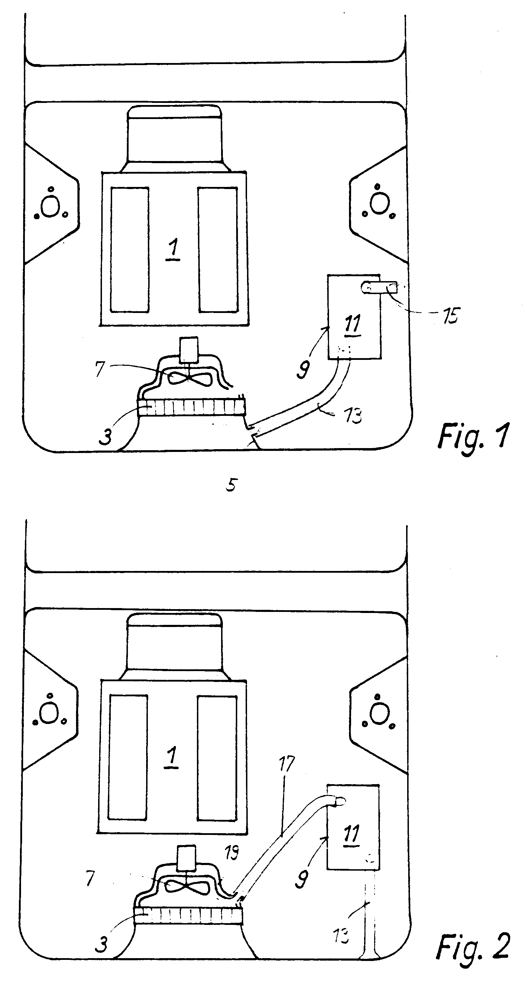

Fig. 1 zeigt als Prinzipbild in Draufsicht den Motorraum eines Personenkraftwagens. In Fahrtrichtung ist vor dem Motor 1 ein Kühler 3 zur Kühlung des Kühlmittels für den Motor 1 angeordnet. Zur Frontseite des Fahrzeuges schließt sich an den Kühler 3 eine Luftleiteinrichtung 5 an, welche die im Fahrbetrieb auf die Front des Fahrzeuges auftreffende Luft gezielt dem Kühler 3 zuführt.

Um im Stand oder bei langsamer Fahrt einen ausreichenden Kühlluftdurchsatz durch den Kühler 3 zu gewährleisten, schließt sich an den Kühler 3 ein Lüfter 7 an, welcher permanent oder temperaturgesteuert Luft durch den Kühler 3 saugt.

Neben dem Motor 1 nimmt der Motorraum auch ein Gehäuse 9 für die Batterie des Fahrzeuges auf. Das Gehäuse ist mit einem Deckel 11 versehen, so daß die Batterie zur Wartung oder zum Ersatz von oben zugänglich ist.

Auf der Unterseite des Gehäuses 9 ist eine flexible Leitung 13 angeschlossen, welche in der Luftleiteinrichtung 5 mündet. Der Deckel 11 nimmt auf der Seite, die dem Anschluß der Leitung 13 am Gehäuse 9 gegenüberliegt, ein Leitungsstück 15 auf. Dieses Leitungsstück 15 verbindet den Innenraum des Gehäuses 9 indirekt mit der Außenluft, indem das Leitungsstück bis in den Bereich der Fuge zwischen der Motorhaube und dem vorderen linken Kotflügel (beides nicht dargestellt) ragt. Es ist natürlich auch möglich, das Leitungsstück 15 so anzuschließen, daß es direkt mit der Außenluft in Verbindung steht. Dies kann beispielsweise dadurch geschehen, daß es mit einer Öffnung in dem Radhaus (nicht dargestellt) verbunden ist.

Bei stehendem Fahrzeug und laufendem Lüfter 7 entsteht in der Luftleiteinrichtung 5 ein Unterdruck. Dieser bewirkt, daß über die Leitung 13 aus dem Gehäuse 9 der Batterie die erwärmte Luft abgesaugt wird. Über das Leitungsstück 15 gelangt deshalb relativ kühle Außenluft in das Gehäuse 9, wodurch die Batterie gekühlt wird. Durch die diametral gegenüberliegende Anordnung der Anschlüsse der Leitung 13 und des Leitungsstücks 15 an dem Gehäuse 9 wird eine gute Durchströmung des Gehäuses und darüber eine wirksame Kühlung der Batterie erreicht.

Im Fahrbetrieb des Fahrzeuges entsteht in der Luftleiteinrichtung 5 ein Überdruck, wodurch über die Leitung 13 Frischluft in das Gehäuse 9 für die Batterie geführt wird. Dort kann sie sich durch Entlanggleiten an der Batterie entwärmen und über das Leitungsstück 15 wieder entweichen.

Fig. 2 zeigt eine alternative Luftführung zur Kühlung der Batterie. Die Luft gelangt dort von der Lufteintrittsöffnung im Frontbereich des Fahrzeugs über die Leitung 13 in das Gehäuse 9 für die Batterie. Von dort führt eine Schlauchleitung 17 zu einer Lüfterhutze 19, in welcher der Lüfter 7 aufgenommen ist. Wenn der Lüfter 7 arbeitet, entsteht in der Lüfterhutze ein Unterdruck, welcher eine Absaugung der Luft aus dem Gehäuse 9 für die Batterie bewirkt. Bei stehendem Lüfter und bewegtem Fahrzeug wird die Luft durch den Staudruck über die Leitung 13 in das Gehäuse 9 gedrückt. Von dort gelangt die durch die Batterie erwärmte Luft über die Schlauchleitung 17 in die Lüfterhutze 19 und über den Lüfter 7 wieder nach außen.

## Patentansprüche

1. Anordnung zur Kühlung der Batterie eines Kraftfahrzeuges, wobei die Batterie zumindest teilweise in einem Gehäuse (9) angeordnet ist und an das Gehäuse (9) zum Luftaustausch eine Leitung (13,15) angeschlossen ist, welche im Frontbereich des Fahrzeuges mit einer Öffnung endet, dadurch gekennzeichnet, daß von dem Gehäuse (9) der Batterie eine weitere Leitung (13, 17) zu einer Luftleiteinrichtung (5) führt, in welche ein mit einem abschaltbaren Lüfter (7) ausgestatteter Kühler (3) für den Motor (1) des Kraftfahrzeuges eingesetzt ist, und daß zum Anschluß der weiteren Leitung (13,17) die Wandung der Luftleiteinrichtung eine entsprechende Aussparung aufweist.

2. Anordnung nach Anspruch 1, dadurch gekennnzeichnet, daß die Aussparung zum Anschluß der Leitung (13) - bezogen auf die Strömungsrichtung der Kühlluftströmung - vor dem Kühler (3) angeordnet ist.

3. Anordnung nach Anspruch 1, dadurch gekennzeichnet, daß die Aussparung zum Anschluß der Leitung (17) - bezogen auf die Strömungsrichtung der Kühlluftströmung - nach dem Kühler (3) angeordnet ist.

4. Anordnung nach einem der Ansprüche 1 bis 3, dadurch gekennzeichnet, daß die Luft am Boden des Gehäuses (9) für die Batterie eintritt und am Deckel (11) des Gehäuses (9) austritt.

5. Anordnung nach Anspruch 4, dadurch gekennzeichnet, daß die im Gehäuse (9) ausgebildeten Öffnungen für den Lufteintritt und den Luftaustritt diagonal gegenüberliegen.

6. Anordnung nach Anspruch 4 oder 5, dadurch gekennzeichnet, daß am Boden des Gehäuses (9) in das Gehäuse (9) vorstehende Rippen ausgebildet sind, auf welchen die Batterie aufliegt und zwischen denen die eintretende Luft hindurchströmt.

## Claims

1. Arrangement for cooling the battery of a motor vehicle, the battery being at least partly arranged in a case (9) and a line (13, 15) being connected to the case (9) to allow exchange of air and terminating in an opening in the frontal region of the vehicle, characterized in that from the battery case (9) an additional line (13, 17) runs to an air conducting unit (5) into which is placed a radiator (3) for the engine (1) of the motor vehicle, fitted with a fan (7) which is adapted to be switched off, and in that for connection of the additional line (13, 17) the wall of the air conducting unit incorporates a corresponding chased area.

2. Arrangement according to claim 1, characterized in that the chased area for connecting the line (13) is arranged before the radiator (3) - based on the direction of the flow of cooling air.

3. Arrangement according to claim 1, characterized in that the chased area for connecting the line (17) is arranged after the radiator (3) - based on the direction of the flow of cooling air.

4. Arrangement according to any of claims 1 to 3, characterized in that the air enters at the bottom of the case (9) for the battery and exits at the lid (11) of the case (9).

5. Arrangement according to claim 4, characterised in that the openings formed in the case (9) for the air to enter and to exit are diagonally opposed.

6. Arrangement according to claim 4 or 5, characterised in that formed on the bottom of the case (9) are ribs which project into the case (9) and on which the battery rests and between which the incoming air flows through.

## Revendications

1. Système de refroidissement de la batterie d'un véhicule automobile, la batterie étant disposée, au moins partiellement, dans un boîtier (9), tandis qu'au boîtier (9) est raccordé, en vue de l'échange d'air, un conduit (13,15) qui se termine par une ouverture dans la région frontale du véhicule, caractérisé en ce que, depuis le boîtier (9) de la batterie, un conduit supplémentaire (13,17) mène à un dispositif de canalisation d'air (5), dans lequel est placé un radiateur (3), équipé d'un ventilateur (7) pouvant être coupé, pour le moteur (1) du véhicule automobile, et en ce que, pour le raccordement du conduit supplémentaire (13,17), la paroi du dispositif de canalisation d'air présente un évidement approprié.

2. Système selon la revendication 1, caractérisé en ce que l'évidement pour le raccordement du conduit (13) est disposé en amont du radiateur (3), par rapport au sens de circulation du courant d'air de refroidissement.

3. Système selon la revendication 1, caractérisé en ce que l'évidement pour le raccordement du conduit (17) est disposé en aval du radiateur (3), par rapport au sens de circulation du courant d'air de refroidissement.

4. Système selon l'une des revendications 1 à 3, caractérisé en ce que l'air entre au niveau du fond du boîtier (9) pour la batterie et sort au niveau du couvercle (11) du boîtier (9).

5. Système selon la revendication 4, caractérisé en ce que les ouvertures ménagées dans le boîtier (9), pour l'entrée de l'air et la sortie de l'air, sont opposées l'une à l'autre en diagonale.

6. Système selon la revendication 4 ou 5, caractérisé en ce que, sur le fond du boîtier (9), sont ménagées des nervures saillant dans le boîtier (9), sur lesquelles la batterie repose et entre lesquelles l'air entrant s'écoule.
